# EUROPÄISCHE PATENTANMELDUNG

(11) **EP 0 896 188 A2**
(43) Veröffentlichungstag der Anmeldung: **10.02.1999**
(21) Anmeldenummer: 98113984.3
(22) Anmeldetag: 27.07.1998
(51) Int. Cl.: F21V 21/26

(54) **Leuchtengelenk**

(30) Priorität: 04.08.1997 DE 19733713
(71) Anmelder: Herbert Waldmann GmbH & Co., 78056 Villingen-Schwenningen (DE)
(72) Erfinder: Waldmann, Gerhard, 78083 Dauchingen (DE)
(74) Vertreter: Patentanwälte Westphal, Buchner, Mussgnug Neunert, Göhring

(57) **Zusammenfassung**

Leuchtengelenk zur schwenkbaren Verbindung eines Leuchtengestänges (10) mit einem Leuchtenkopf (16). Eine mit einem der gegeneinander verschwenkbaren Teile (10,16) fest verbundene Anschlagschraube (14) und ein mit dem jeweils anderen verschwenkbaren Teil (16,10) fest verbundener Anschlag (28) begrenzen den Schwenkwinkel zwischen Leuchtengestänge (10) und Leuchtenkopf (16). Zwischen Anschlagschraube (14) und Anschlag (28) ist eine mit der Schwenkbewegung der Teile (10,16) sich mitdrehende Anschlagscheibe (20) eingeschaltet, die zwei im Winkelabstand voneinander radial vorstehende Lappen (22,24) zur Anlage an je einer Seite des Anschlags (28) und etwa mittig zwischen den Lappen (22,24) einen Anschlagnocken (26) aufweist, an dessen beiden Seiten die Anschlagschraube (14) in unterschiedlichen Schwenkstellungen der Teile (10,16) anlegen kann. Dadurch wird ein Schwenkbereich zwischen Leuchtengestänge (10) und Leuchtenkopf (16) von wenigstens 360°, vorzugsweise mehr als 360°, ermöglicht.

## Beschreibung

Die Erfindung betrifft ein Leuchtengelenk nach dem Oberbegriff des Anspruchs 1.

Bei einem aus DE 86 19 907 U1 bekannten Leuchtengelenk dieser Art ist der mögliche Schwenkwinkel zwischen Leuchtengestänge und Leuchtenkopf um eine Achse quer zur Abstrahlrichtung des Lichts vom Leuchtenkopf durch Anschläge auf weniger als 360° eingeschränkt. Dies ist bei bestimmten Anwendungen von Nachteil, bei welchen ein Schwenkbereich von 360° oder mehr erwünscht ist.

Durch die Erfindung soll daher ein Leuchtengelenk geschaffen werden, das einen Schwenkbereich zwischen Leuchtengestänge und Leuchtenkopf von wenigstens 360°, vorzugsweise mehr als 360°, gestattet.

Diese Aufgabe wird erfindungsgemäß durch die Merkmale des Anspruchs 1 gelöst.

Durch die sich mitdrehende oder "mitlaufende" Anschlagscheibe zwischen Leuchtengestänge und Leuchtenkopf kommt nicht mehr der mit dem Leuchtenkopf fest verbundene Anschlag unmittelbar an der gestängefesten Anschlagschraube zur Anlage, um den Schwenkbereich zu begrenzen, sondern der Anstand der beiden Lappen an der Anschlagscheibe abzüglich der Winkelbreite des Anschlags selbst ergibt einen zusätzlichen Schwenkbereich, der sich zu dem Schwenkbereich addiert, der durch die Lage der gestängefesten Anschlagschraube und des Anschlagnockens an der Anschlagscheibe ergibt. So läßt sich mühelos durch geeignete Wahl des Winkelabstandes der beiden Lappen an der Anschlagscheibe der mögliche Schwenkbereich des Schwenkgelenks um weitgehend beliebige Winkelabstände, d.h. auch über 360° hinaus, erweitern.

Die Unteransprüche sind auf vorteilhafte Ausgestaltungen der Erfindung gerichtet. So ist es nach Anspruch 2 bei der bevorzugten Ausführungsform möglich, daß die Anschlagschraube drehfest am Leuchtengestänge festgelegt ist, während der Anschlag mit dem Leuchtenkopf verschwenkbar ist. Umgekehrt ist es aber nach Anspruch 3 grundsätzlich auch möglich, den Leuchtenkopf mit einer Anschlagschraube festzulegen und den drehbaren Anschlag am Leuchtengestänge anzubringen, wenn dieses geeignet ausgebildet ist.

Zweckmäßigerweise läßt sich nach Anspruch 4 die Reibung zwischen den schwenkbaren Teilen und der Anschlagscheibe durch die Wahl geeigneter Beilagscheiben einstellen.

Anhand der Figuren wird ein bevorzugtes Ausführungsbeispiel der Erfindung näher erläutert. Es zeigt:
- Figur 1: eine Teilansicht des Leuchtengelenks mit Leuchtenkopf, wobei das Leuchtengestänge radial geschnitten ist,
- Figur 2: einen Schnitt längs der Linie II-II in Fig.1, und
- Figur 3: eine der Fig.1 entsprechende Ansicht, wobei in Fig.1 alle Teile in der einen und in Fig.3 alle Teile in der anderen extremen Schwenkstellung dargestellt sind.

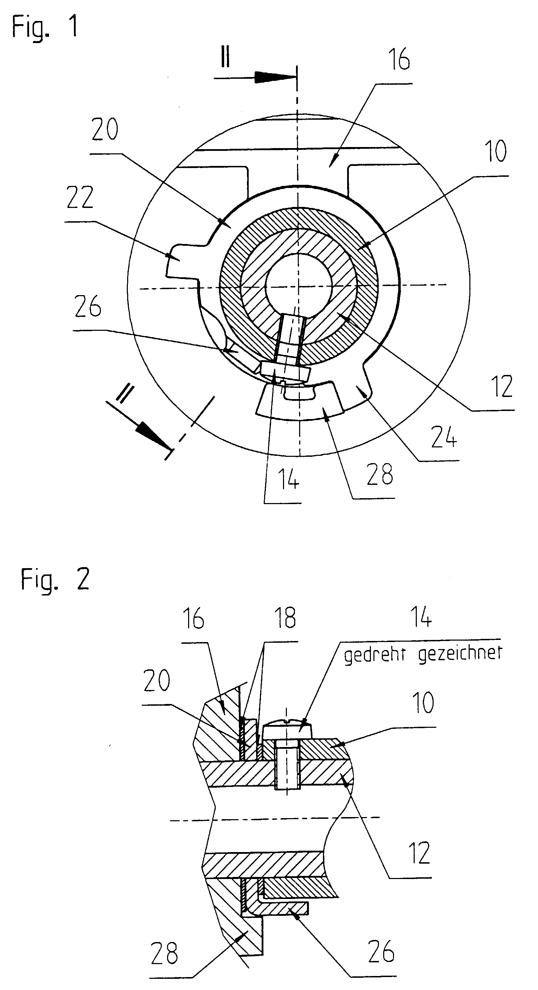

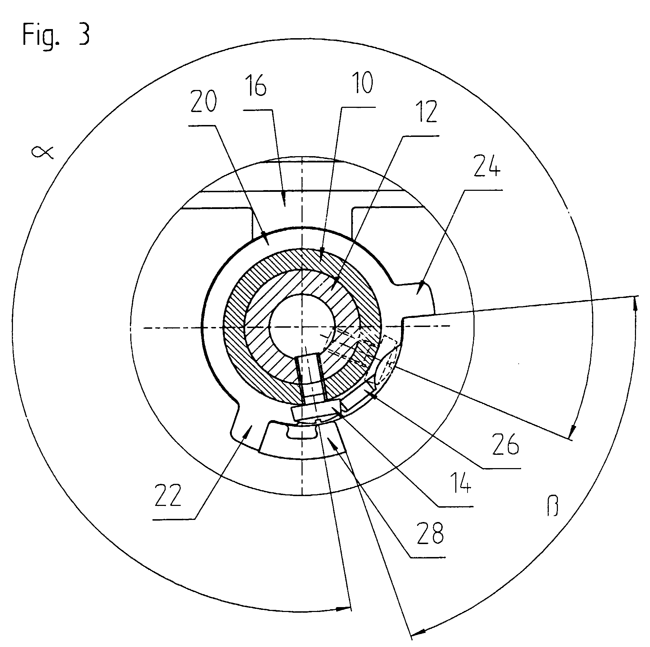

In den Figuren ist das Ende eines rohrförmigen Leuchtengestänges 10 zu sehen, in das ein Rohrstück 12 eingesteckt und durch eine Anschlagschraube 14 festgelegt ist. Auf dem Rohrstück 12 ist der nur ansatzweise zu sehende Leuchtenkopf 16 drehbar gelagert. Zwischen dem Ende des Leuchtengestänges 10 und dem Leuchtenkopf 16 ist auf dem Rohrstück 12 unter Zwischenschaltung von reibenden Beilagscheiben 18 eine ringförmige Anschlagscheibe 20 drehbar gelagert. Die Anschlagscheibe 20 trägt zwei radial vorstehende Lappen 22 und 24, die bei der dargestellten Ausführungsform in einem Winkelabstand von etwa 140° angeordnet sind. Etwa mittig zwischen den beiden Lappen 22 und 24 ist ein senkrecht ausgebogener, axial vorstehender Anschlagnocken 26 angeordnet, an dessen beiden Enden in Umfangsrichtung die Anschlagschraube 14 an den Enden einer Schwenkbewegung des Leuchtenkopfes 16 um etwa 325° zur Anlage kommen kann. In Fig.1 ist die Anschlagschraube 14 anliegend an einem Umfangsende des Anschlagnockens 26 gezeichnet, während sie im Schnitt der Fig.2 gegenüber Fig.1 um etwa 180° verdreht gezeichnet ist. Des dient lediglich der Verdeutlichung der Darstellung und spielt für das Wesen der Erfindung keine Rolle, da grundsätzlich statt eines verschwenkbaren Leuchtenkopfes 16 und feststehenden Leuchtengestänges 10 auch eine Verschwenkung des Leuchtengestänges 10 und ein feststehender Leuchtenkopf 16 angenommen werden können. Entscheidend ist lediglich der gesamte Winkelbereich der möglichen Verschwenkung, der aus den Einzeichnungen in Fig.3 zu entnehmen ist, wie weiter unten erläutert.

Mit dem Leuchtenkopf 16 fest verbunden ist ein aus dessen Stirnseite zum Leuchtengestänge 10 hin vorstehender Anschlag 28, an dessen einer Seite, in Umfangsrichtung zu sehen, der Lappen 22 zur Anlage kommen kann, wie in Fig.3 gezeigt, und an dessen anderer Seite der Lappen 24 zur Anlage kommen kann, wie in Fig.1 gezeigt. Durch das Anschlagen der beiden Lappen 22 und 24 am Anschlag 28 wird ein Schwenkbereich β der Anschlagscheibe 20 von etwa 100° festgelegt. Gleichzeitig kann die Anschlagschraube 14 zwischen der in Fig.3 in ausgezogenen Linien dargestellten Anschlagstellung auf einer Seite des Anschlagnockens 26 und der in Fig.3 in gestrichelten Linien dargestellten Anlagestellung auf der anderen Seite des Anschlagnockens 26 um einen Winkel α von etwa 300° verstellt werden. Zusammen ergibt sich also ein Schwenkbereich von α + β, der bei der dargestellten Ausführungsform etwa 380° beträgt. Durch Verkleinerung oder Vergrößerung des Winkelabstandes der Lappen 22 und 24 an der Anschlagscheibe 20 läßt sich der gesamte Schwenkbereich je nach Bedürfnis des Anwendungsfalles in weiten Grenzen verkleinern oder vergrößern.

Es ist für den Fachmann selbstverständlich, daß statt der dargestellten und in den Ansprüchen erwähnten Anschlagschraube 14 beim erfindungsgemäßen Leuchtengelenk auch jede andere Art und Form eines Anschlags gewählt werden kann, wenn dies für den Anwendungszweck vorteilhaft erscheint. Dies gilt auch für Art und Form der übrigen Anschlagseinrichtungen, nämlich der Lappen 22 und 24, des Anschlagnockens 26 und des Anschlags 28.

## Patentansprüche

1. Leuchtengelenk zur schwenkbaren Verbindung eines Leuchtengestänges mit einem Leuchtenkopf, wobei eine mit einem der gegeneinander verschwenkbaren Teile fest verbundene Anschlagschraube und ein mit dem jeweils anderen verschwenkbaren Teil fest verbundener Anschlag den Schwenkwinkel zwischen Leuchtengestänge und Leuchtenkopf begrenzen, dadurch gekennzeichnet, daß zwischen Anschlagschraube (14) und Anschlag (28) eine mit der Schwenkbewegung der Teile (10,16) sich mitdrehende Anschlagscheibe (20) eingeschaltet ist, die zwei im Winkelabstand voneinander radial vorstehende Lappen (22,24) zur Anlage an je einer Seite des Anschlags (28) und etwa mittig zwischen den Lappen (22,24) einen Anschlagnocken (26) aufweist, an dessen beiden Seiten die Anschlagschraube (14) in unterschiedlichen Schwenkstellungen der Teile (10,16) anliegen kann.

2. Leuchtengelenk nach Anspruch 1, dadurch gekennzeichnet, daß die Anschlagschraube (14) drehfest am Leuchtengestänge (10) festgelegt ist und der Anschlag (28) mit dem verschwenkbaren Leuchtenkopf (16) fest verbunden ist.

3. Leuchtengelenk nach Anspruch 1, dadurch gekennzeichnet, daß die Anschlagschraube (14) drehfest am verschwenkbaren Leuchtenkopf (16) festgelegt ist und der Anschlag (28) mit dem Leuchtengestänge (10) fest verbunden ist.

4. Leuchtengelenk nach einem der vorangehenden Ansprüche, dadurch gekennzeichnet, daß zwischen Leuchtengestänge (10) und Anschlagscheibe (20) einerseits und/oder zwischen Anschlagscheibe (20) und Leuchtenkopf (16) andererseits jeweils eine die Reibung einstellende Beilagscheibe (18) eingefügt ist.
